(19) Europäisches Patentamt
European Patent Office
Office européen des brevets

(11) Veröffentlichungsnummer: **0 158 726**
**A1**

(12) # EUROPÄISCHE PATENTANMELDUNG

(21) Anmeldenummer: 84115196.2

(22) Anmeldetag: 12.12.84

(51) Int. Cl.$^4$: **C 08 G 73/22**
C 08 G 73/06, H 01 L 21/47
G 03 C 1/70, G 03 F 7/26

(30) Priorität: 29.03.84 DE 3411659

(43) Veröffentlichungstag der Anmeldung:
23.10.85 Patentblatt 85/43

(84) Benannte Vertragsstaaten:
AT BE CH DE FR GB IT LI NL SE

(71) Anmelder: Siemens Aktiengesellschaft
Berlin und München Wittelsbacherplatz 2
D-8000 München 2(DE)

(72) Erfinder: Ahne, Hellmut, Dr.
Heidestrasse 6
D-8551 Röttenbach(DE)

(54) **Verfahren zur Herstellung von Polyoxazol- und Polythiazolvorstufen.**

(57) Oligomere und/oder polymere Polyoxazol- und Polythiazol- Vorstufen lassen sich dann in einfacher Weise in hoher Reinheit, d.h. insbesondere chloridfrei, herstellen, wenn eine aromatische und/oder heterocyclische Dihydroxy-, Dialkoxy- oder Diaryloxydiaminoverbindung bzw. eine entsprechende Dithioverbindung in Gegenwart eines Carbodiimids mit einer Dicarbonsäure zur Reaktion gebracht wird. Die in dieser Weise hergestellten Vorstufen eignen sich beispielsweise zur Herstellung von Schutz- und Isolierschichten.

EP 0 158 726 A1

Croydon Printing Company Ltd.

SIEMENS AKTIENGESELLSCHAFT
Berlin und München

Unser Zeichen
VPA 84 P 3120 E

## Verfahren zur Herstellung von Polyoxazol- und Polythiazol-Vorstufen

Die Erfindung betrifft ein Verfahren zur Herstellung oligomerer und/oder polymerer Vorstufen von Polyoxazolen und Polythiazolen sowie die Verwendung dieser Vorstufen.

Vorstufen von Polyoxazolen und Polythiazolen sind bereits bekannt (siehe beispielsweise: E. Behr "Hochtemperaturbeständige Kunststoffe", Carl Hanser Verlag, München, 1969, Seiten 99 bis 102). Sie werden aus Dihydroxydiaminen bzw. Dimercaptodiaminen und Dicarbonsäurederivaten, insbesondere den Säurechloriden, hergestellt. Durch Tempern (bei Temperaturen zwischen 220 und 500°C bzw. bei etwa 400°C) können diese Vorstufen in Polyoxazole bzw. Polythiazole übergeführt werden.

Polyoxazole und Polythiazole können - aufgrund der hohen thermischen Beständigkeit an Luft (bis zu etwa 520°C) und der ausgezeichneten chemischen Resistenz gegenüber Säuren und Basen - beispielsweise bei der Rasterung von Eingangsschirmen für Röntgenbildverstärker und vor allem in der Mikroelektronik, und zwar als ätzresistente Schutz- und Isolierschichten, Verwendung finden. Für diese Anwendungen werden aber hohe Anforderungen an die Reinheit gestellt, um Korrosionserscheinungen beim Langzeitbetrieb vorzubeugen. Der starke Kostendruck auf dem Halbleitersektor zwingt darüber hinaus zum Einsatz kostengünstiger Materialien und Verfahren.

Bh 2 Koe / 27.03.1984

Aus der DE-OS 29 33 828 ist ein Verfahren zur Herstellung von Polyoxazol-Vorstufen bekannt, bei welchem eine aromatische und/oder heterocyclische Dihydroxydiaminoverbindung mit einem Dicarbonsäurechlorid oder -ester zu einem hydroxylgruppenhaltigen Polykondensationsprodukt umgesetzt und an dieses Polykondensationsprodukt dann ein olefinisch ungesättigtes Monoepoxid addiert wird. Auf diese Weise werden strahlungsreaktive Polyoxazol-Vorstufen erhalten, d.h. diese Verbindungen können durch Strahlung vernetzt und dabei in hochwärmebeständige Polymere übergeführt werden (siehe dazu DE-OS 29 33 805).

Neben den vorstehend genannten Resists, es handelt sich hierbei um sogenannte Negativresists, sind auch wärmebeständige Positivresists auf der Basis von Polyoxazol-Vorstufen bekannt. Diese Positivresists weisen Polyoxazol-Vorstufen in Form von Polykondensationsprodukten aus Dihydroxydiaminoverbindungen und Dicarbonsäurechloriden oder -estern sowie lichtempfindliche Diazochinone auf (DE-OS 29 31 297).

Bei den bislang bekannten Polyoxazol- und Polythiazol-Vorstufen ist jedoch - beim Einsatz von Säurechloriden - die Herstellung in hoher Reinheit problematisch und teuer. Die bekannten Synthesemethoden sind nämlich sehr kostenaufwendig, und zwar insbesondere deshalb, weil zur Erzielung eines niedrigen Chloridgehaltes umfangreiche Reinigungsoperationen erforderlich sind. Andererseits entstehen bei der Verwendung von Estern vorwiegend nur niedermolekulare Verbindungen.

Aufgabe der Erfindung ist es, ein Verfahren anzugeben, das die einfache Herstellung von oligomeren und/oder polymeren Polyoxazol- und Polythiazol-Vorstufen hoher Reinheit erlaubt, d.h. von Vorstufen, die insbesondere chloridfrei sind.

Dies wird erfindungsgemäß dadurch erreicht, daß eine aromatische und/oder heterocyclische Dihydroxy-, Dialkoxy- oder Diaryloxydiaminoverbindung bzw. eine entsprechende Dithioverbindung in Gegenwart eines Carbodiimids mit einer Dicarbonsäure zur Reaktion gebracht wird.

Nach dem erfindungsgemäßen Verfahren können Polyoxazol- und Polythiazol-Vorstufen in hoher Reinheit, insbesondere chloridfrei, hergestellt werden, ohne daß zusätzliche Reinigungsoperationen erforderlich sind. Ein weiterer Vorteil dieses Verfahrens besteht darin, daß die Reaktionslösung - nach Abtrennung des als Nebenprodukt anfallenden Harnstoffderivates - direkt und ohne Isolierung der Vorstufen als Festharz weiterverwendet werden kann, was einen wesentlichen wirtschaftlichen Vorteil darstellt. Neben der Tatsache, daß das erfindungsgemäße Verfahren präparativ einfach durchzuführen ist und die Reaktionsprodukte in reinem Zustand anfallen, ist bei diesem Verfahren auch noch wesentlich, daß es bei relativ niedrigen Temperaturen verläuft, d.h. bei Temperaturen, bei denen noch keine Umwandlung der Vorstufen in unlösliche Cyclisierungsprodukte erfolgt.

Das erfindungsgemäße Verfahren kann vorteilhaft in der Weise weiter ausgestaltet werden, daß an das Polykondensationsprodukt aus der Dihydroxydiaminoverbindung bzw. aus der Dimercaptodiaminoverbindung, d.h. aus der der Dihydroxyverbindung entsprechenden Dithioverbindung, und der Dicarbonsäure ein olefinisch ungesättigtes Monoepoxid addiert wird. Auf diese Weise werden nämlich strahlungsreaktive Polyoxazol- bzw. Polythiazol-Vorstufen erhalten, die beispielsweise als Photoresist oder auch zur Herstellung von Schutz- und Isolierschichten verwendet werden können.

Die Reaktion zwischen dem Polykondensationsprodukt und dem olefinisch ungesättigten Monoepoxid wird vorzugsweise bei Raumtemperatur oder bei Temperaturen bis ca. 100°C in einem organischen Lösungsmittel, gegebenenfalls in Gegenwart eines aminischen Katalysators, durchgeführt.

Die erfindungsgemäß hergestellten Vorstufen weisen im allgemeinen folgende Struktur auf:

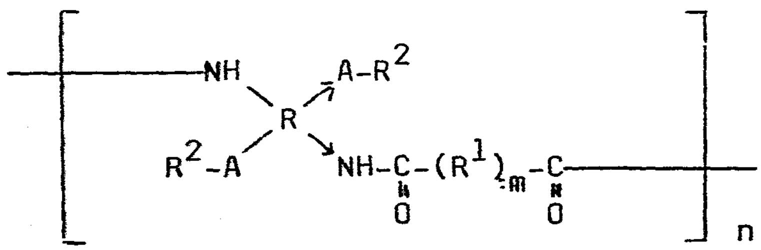

Mit den in der Formel enthaltenen Pfeilen soll dabei die Tatsache zum Ausdruck gebracht werden, daß die beiden fraglichen Substituenten an R ihre Stellung vertauschen können. Dies ist deshalb von Bedeutung, weil es sich bei R, wie nachfolgend noch erläutert wird, um einen cyclischen Rest handelt.

In der Formel bedeutet n eine ganze Zahl von 2 bis etwa 100 und m ist 0 oder 1.
Für R, $R^1$ und $R^2$ gilt folgendes:

R ist ein - gegebenenfalls halogenierter - zumindest partiell aromatischer und/oder heterocyclischer tetravalenter, d.h. tetrafunktioneller Rest, bei dem jeweils zwei Valenzen in Nachbarstellung zueinander angeordnet sind; weist der Rest R mehrere aromatische und/oder heterocyclische Strukturelemente auf, so befinden sich die Valenzpaare jeweils an endständigen derartigen Strukturelementen;

$R^1$ ist ein - gegebenenfalls halogenierter - divalenter, d.h. difunktioneller Rest aliphatischer und/oder cycloaliphatischer, gegebenenfalls Heteroatome aufweisender, und/oder aromatischer und/oder heterocyclischer Struktur;

$R^2$ ist Wasserstoff, ein Alkyl- oder Arylrest oder ein olefinisch ungesättigter Rest, beispielsweise eine allyletherhaltige Gruppe, insbesondere eine - gegebenenfalls substituierte - (meth)acrylesterhaltige Gruppe oder eine Propargylgruppe;

A bedeutet -O- oder -S-.

Die Reste R, $R^1$ und $R^2$ haben insbesondere folgende Bedeutung:

R = 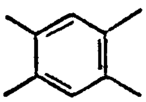 , 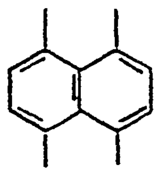 , 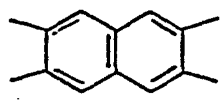 , 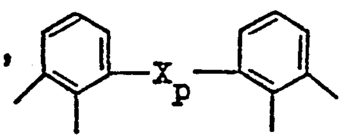 ,

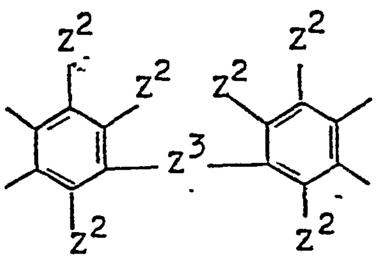 , 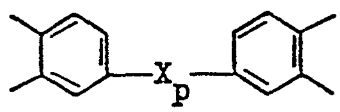 ,

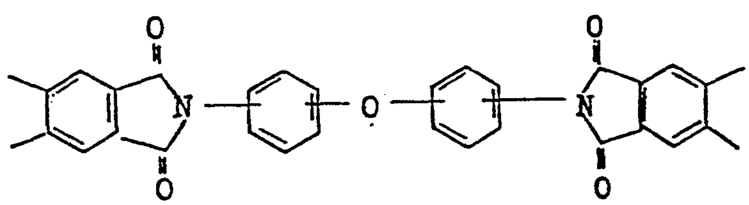 ,

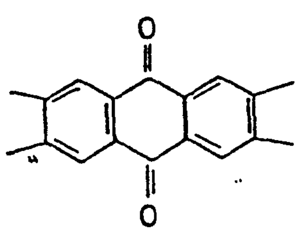 , 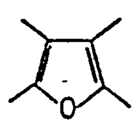 und 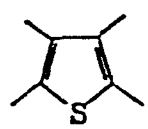 ,

wobei p=0 oder 1 ist und X für einen der nachfolgenden Reste steht.

X = 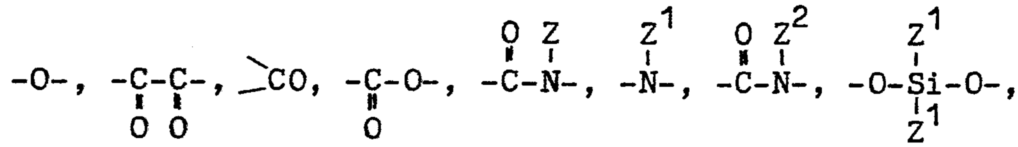,

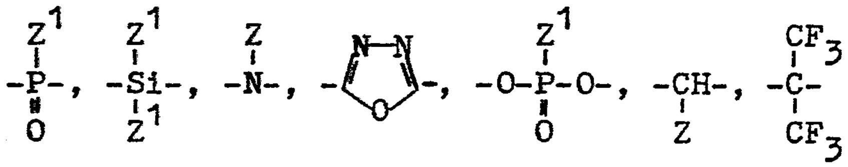,

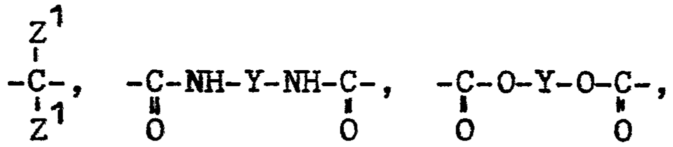, -SO-, $-SO_2-$,

$-SO_2NH-$, -S-, 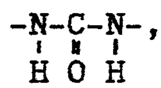, -N=N-,

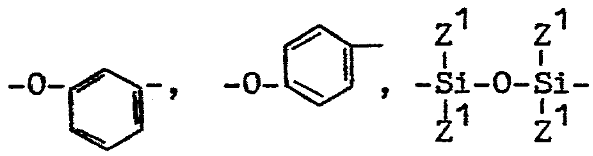 und 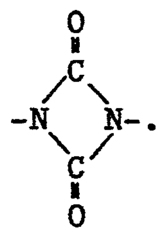.

Für die weiteren Reste gilt:

Y = 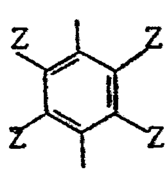, $-(CH_2)_o-$ mit o=2 bis 10, und

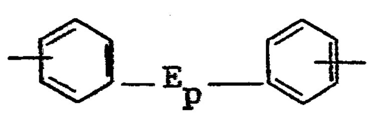 mit p=0 oder 1,

Z = H oder Alkyl mit 1 bis 6 Kohlenstoffatomen,

$Z^1$ = Alkyl mit 1 bis 10 Kohlenstoffatomen oder Aryl,

$Z^2$ = Aryl oder Heteroaryl, und

$Z^3$ = 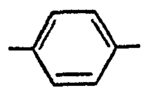 oder 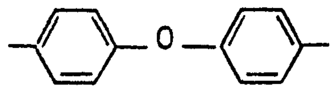 ;

E = 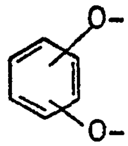 , 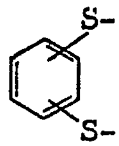 , 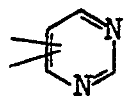 , 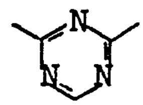 , 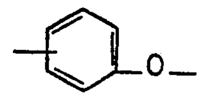 ,

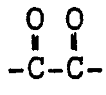 , 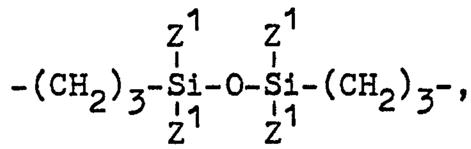 , 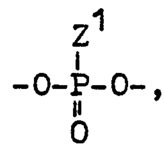 , 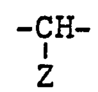 ,

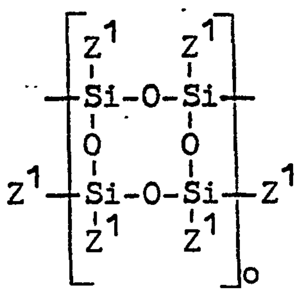 , 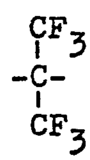 ,

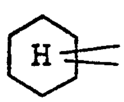 , $-(CH_2)_q-$, $-(CF_2)_r-$, -SO-, $-SO_2-$,

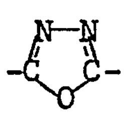 , $-SO_2NH-$, 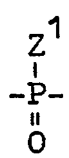 , 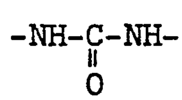 , 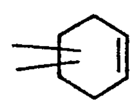 ,

-N=N-, 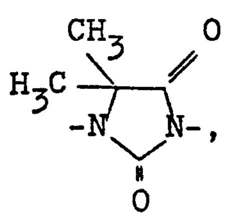 , -S-, -O-, 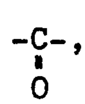 , 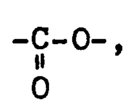 ,

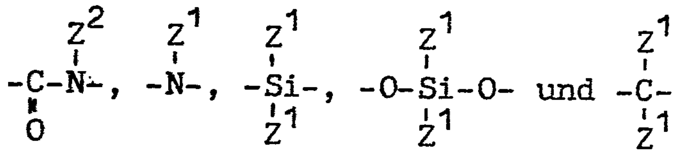 ,

wobei o=2 bis 10, q=2 bis 14 und r=2 bis 18, und $Z^1$ und $Z^2$ wie vorstehend definiert sind.

$R^1$ = 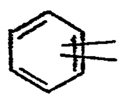 , 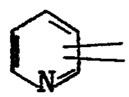 , 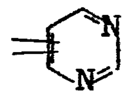 , 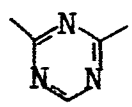 , 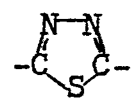 ,

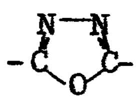 , 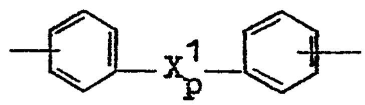 ,

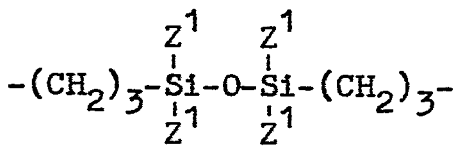, 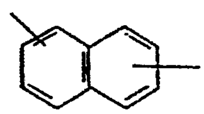 , 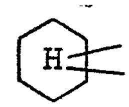 ,

$-(CH_2)_q-$, $-(CF_2)_r-$, 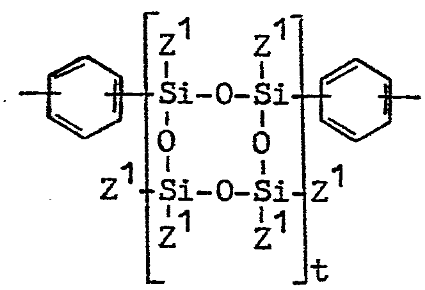 ,

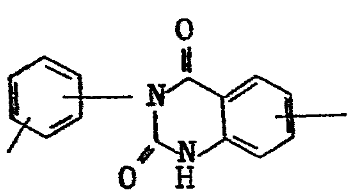 , 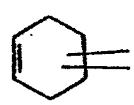 , 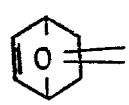 , 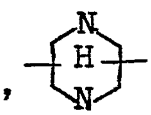 ,

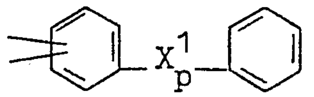 , 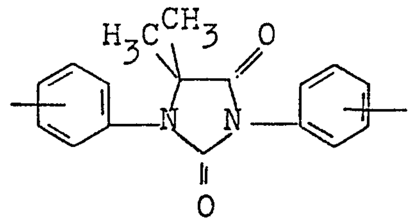 ,

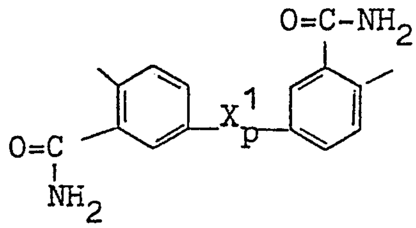 und 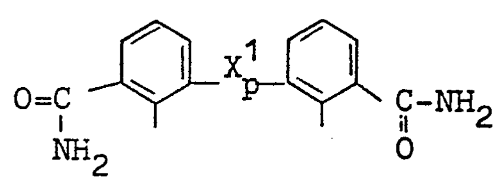 ,

wobei p=0 oder 1, q=2 bis 14, r=2 bis 18 und t=1 bis 10, und $Z^1$ wie vorstehend definiert ist;

$X^1$ =

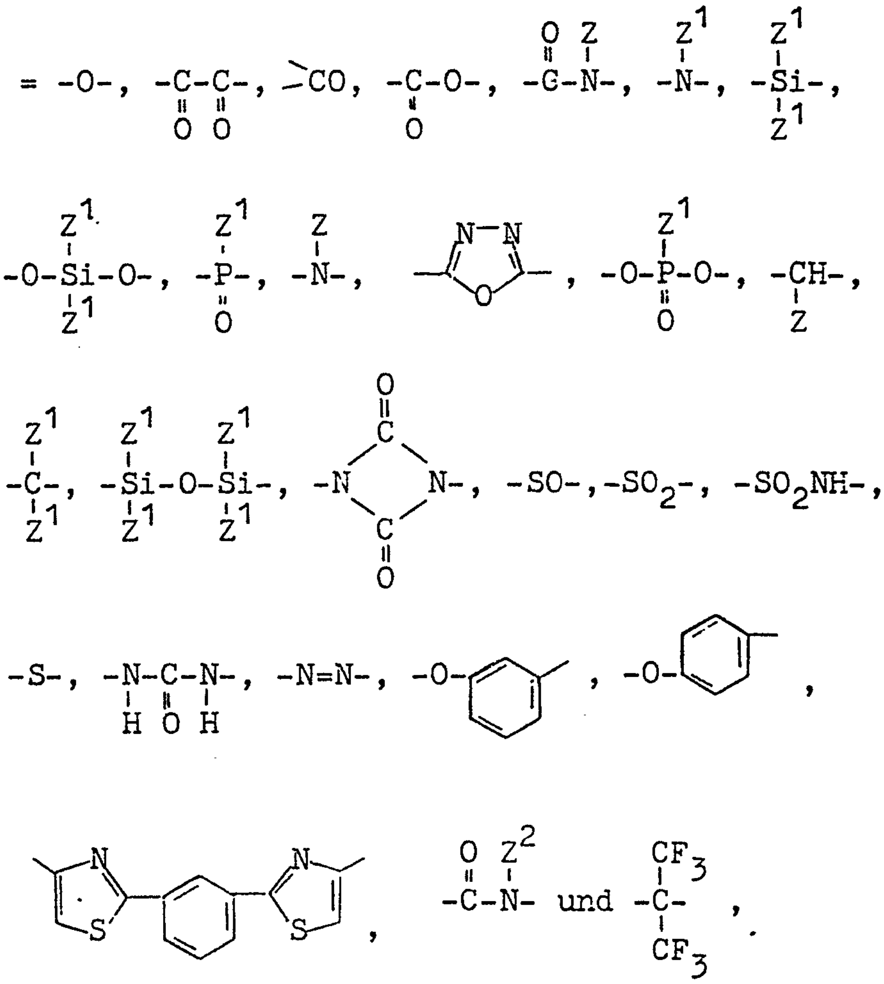

wobei Z, $Z^1$ und $Z^2$ wie vorstehend definiert sind.

$R^2$ = -H, $-CH_3$, -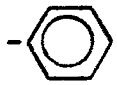 ,

$-CH_2-CH(OH)-X^2-O-C(=O)-C(Y^2)=CH_2$ ,

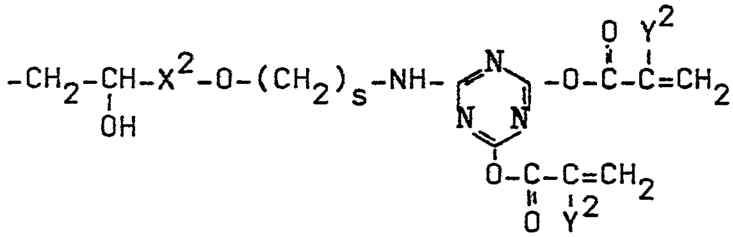 und

$-CH_2-CH(OH)-X^2-O-CH_2-CH=CH_2$;

dabei ist s=2 bis 16;

für die weiteren Reste gilt:

$X^2 = -CH_2-$ und $-CH_2-O-[(CH_2)_r-O]_t-(CH_2)_s-$, und

$Y^2 = -H, -CH_3, -Cl, -Br, -C{\equiv}N$,

wobei r=2 bis 18, s=2 bis 16 und t=0 bis 10.

Die erfindungsgemäß hergestellten Vorstufen sind Polykondensationsprodukte von Dicarbonsäuren mit Dihydroxy-, Dialkoxy- oder Diaryloxydiaminoverbindungen (Polyoxazol-Vorstufen) bzw. mit entsprechenden Dithioverbindungen (Polythiazol-Vorstufen); dabei können auch verschiedene Dicarbonsäuren bzw. verschiedene Diaminoverbindungen nebeneinander verwendet werden. Die bevorzugt eingesetzte Dihydroxydiaminoverbindung ist 3.3'-Dihydroxybenzidin; bei den entsprechenden Thiolen, d.h. den Dimercaptodiaminoverbindungen, ist 3.3'-Dimercaptobenzidin bevorzugt. Als Dicarbonsäuren finden vorzugsweise Isophthalsäure und Benzophenondicarbonsäure Verwendung. Das bevorzugte Carbodiimid ist Dicyclohexylcarbodiimid; Carbodiimide sind im übrigen Verbindungen vom Typ R'-N=C=N-R''. Unter den gegebenenfalls eingesetzten

olefinisch ungesättigten Monoepoxiden werden Glycidylacrylat und -methacrylat bevorzugt.

Die erfindungsgemäß hergestellten Vorstufen weisen als Grundbaustein bevorzugt aromatische Diaminoverbindungen auf und ergeben somit bei der thermischen Behandlung Polymere mit folgenden Struktureinheiten:

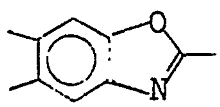 ; 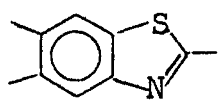

Polyoxazol Polythiazol

Abgesehen von der Verwendung als Photoresist und zur Herstellung von Schutz- und Isolierschichten, wobei eine Strukturierung erfolgt, können die erfindungsgemäßen Vorstufen allgemein - in nicht strukturierter Form - zur Herstellung von Schutz- und Isolierüberzügen verwendet werden.

Anhand von Ausführungsbeispielen soll die Erfindung noch näher erläutert werden.

Beispiel 1

Herstellung einer Polyoxazol-Vorstufe

21,6 Gewichtsteile 3.3'-Dihydroxybenzidin (0,1 Mol) und 17 Gewichtsteile Isophthalsäure (0,12 Mol) werden in 80 Volumenteilen N-Methylpyrrolidon gelöst. Unter Rühren und Kühlung auf 8 bis 10°C werden zu dieser Lösung dann 21 Gewichtsteile Dicyclohexylcarbodiimid (0,1 Mol) in 100 Volumenteilen γ-Butyrolacton langsam zugetropft. Dabei bildet sich eine viskose Harzlösung, die nach beendeter Zugabe noch 3 h bei Raumtemperatur stehengelassen wird; dann wird der bei der Umsetzung entstandene Dicyclohexylharnstoff abfiltriert. Die auf diese Weise erhaltene klare Harzlösung läßt sich durch Aufschleudern auf ein Aluminiumblech und anschließendes Trocknen im Umlufttrockenschrank bei einer Temperatur von 70°C zu einem hellen transparenten Film verarbeiten, der seine Farbe bei einer 10stündigen Temperung bei 400°C an Luft nur geringfügig ändert.

Beispiel 2

Herstellung einer strahlungsreaktiven Polyoxazol-Vorstufe

Zu der entsprechend Beispiel 1 hergestellten Harzlösung werden 50 Volumenteile Glycidylmethacrylat, 0,5 Gewichtsteile Benzyldimethylamin und 0,3 Gewichtsteile Hydrochinon gegeben. Nach 1 1/2stündigem Erwärmen der Reaktionslösung auf eine Temperatur von 80 bis 90°C wird das Reaktionsprodukt unter Rühren aus 1000 Volumenteilen Ethanol gefällt. Nach dem Trocknen wird ein hellbraunes Pulver erhalten.

5 Gewichtsteile des auf die vorstehend beschriebene Weise erhaltenen Festharzes werden in 50 Volumenteilen N-Methylpyrrolidon gelöst, und die Lösung wird dann auf einer Aluminiumfolie zu einem Film gegossen. Nach dem Trocknen im Umluftofen bei einer Temperatur von 70°C wird der Film 5 min mit einer 500 W-Quecksilberhöchstdrucklampe belichtet. Danach ist der Film in N-Methylpyrrolidon unlöslich.

Beispiel 3

Herstellung einer Polythiazol-Vorstufe

Die Herstellung erfolgt entsprechend Beispiel 1, wobei anstelle von 3.3'-Dihydroxybenzidin 3.3'-Dimercaptobenzidin verwendet wird. Die Eigenschaften der dabei erhaltenen Polythiazol-Vorstufe sind die gleichen wie bei der Polyoxazol-Vorstufe nach Beispiel 1.

7 Patentansprüche

## Patentansprüche

1. Verfahren zur Herstellung oligomerer und/oder polymerer Vorstufen von Polyoxazolen und Polythiazolen, dadurch gekennzeichnet, daß eine aromatische und/oder heterocyclische Dihydroxy-, Dialkoxy- oder Diaryloxydiaminoverbindung bzw. eine entsprechende Dithioverbindung in Gegenwart eines Carbodiimids mit einer Dicarbonsäure zur Reaktion gebracht wird.

2. Verfahren zur Herstellung von Polyoxazol-Vorstufen nach Anspruch 1, dadurch gekennzeichnet, daß 3.3'-Dihydroxy- oder 3.3'-Dimethoxybenzidin mit Isophthalsäure oder Benzophenondicarbonsäure zur Reaktion gebracht wird.

3. Verfahren zur Herstellung von Polythiazol-Vorstufen nach Anspruch 1, dadurch gekennzeichnet, daß 3.3'-Dimercaptobenzidin mit Isophthalsäure oder Benzophenondicarbonsäure zur Reaktion gebracht wird.

4. Verfahren nach einem der Ansprüche 1 bis 3, dadurch gekennzeichnet, daß an das Polykondensationsprodukt aus der Dihydroxy- bzw. Dimercaptodiaminoverbindung und der Dicarbonsäure ein olefinisch ungesättigtes Monoepoxid addiert wird.

5. Verfahren nach Anspruch 4, dadurch gekennzeichnet, daß die Reaktion zwischen dem Polykondensationsprodukt und dem olefinisch ungesättigten Monoepoxid bei Raumtemperatur oder bei Temperaturen bis ca. 100°C in einem organischen

Lösungsmittel, gegebenenfalls in Gegenwart eines aminischen Katalysators, durchgeführt wird.

6. Polyoxazol- bzw. Polythiazol-Vorstufen, hergestellt nach einem oder mehreren der Ansprüche 1 bis 5.

7. Verwendung der Vorstufen nach Anspruch 6 zur Herstellung von Schutz- und Isolierschichten, insbesondere in der Halbleitertechnik.

0158726

Europäisches Patentamt

Nummer der Anmeldung

# EUROPÄISCHER RECHERCHENBERICHT

EP 84115196.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE - A1 - 2 933 828 (SIEMENS AG)<br>* Ansprüche 1-4; Seite 11, letzter Absatz *<br>-- | 1-7 | C 08 G 73/22<br>C 08 G 73/06<br>H 01 L 21/47<br>G 03 C 1/70<br>G 03 F 7/26 |
| A | L. UND M. FIESER, "Organische Chemie", 1965<br>VERLAG-CHEMIE, Weinheim/Bergstraße<br>* Seite 1298, 31.21 *<br>---- | 1 | |

| RECHERCHIERTE SACHGEBIETE (Int. Cl.4) |
|---|
| C 08 G 73/00<br>H 01 L<br>G 03 C<br>G 03 F |

Der vorliegende Recherchenbericht wurde für alle Patentansprüche erstellt.

| Recherchenort | Abschlußdatum der Recherche | Prüfer |
|---|---|---|
| WIEN | 04-07-1985 | KALTENEGGER |

KATEGORIE DER GENANNTEN DOKUMENTEN
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument

EPA Form 1503 03 82